# EUROPÄISCHE PATENTSCHRIFT

(11) **EP 1 875 674 B1**
(45) Veröffentlichungstag und Bekanntmachung des Hinweises auf die Patenterteilung: **20.05.2009**
(21) Anmeldenummer: 06725373.2
(22) Anmeldetag: 28.03.2006
(51) Int. Cl.: H04L 12/403, B60R 21/01

(54) **VERFAHREN UND VORRICHTUNGEN ZUM ÜBERTRAGEN VON DATEN AUF EINER DATENLEITUNG ZWISCHEN EINEM STEUERGERÄT UND ZUMINDEST EINEM DEZENTRALEN DATENVERARBEITUNGSGERÄT**
METHOD AND DEVICES FOR TRANSMITTING DATA TO A DATA LINE BETWEEN A CONTROL APPLIANCE AND A DECENTRALISED DATA PROCESSING APPLIANCE
PROCEDE ET DISPOSITIFS POUR LA TRANSMISSION DE DONNEES SUR UNE LIGNE DE DONNEES ENTRE UN APPAREIL DE COMMANDE ET AU MOINS UN APPAREIL DE TRAITEMENT DE DONNEES DECENTRALISE

(30) Priorität: 31.03.2005 DE 102005014783
(43) Veröffentlichungstag der Anmeldung: 09.01.2008
(73) Patentinhaber: Continental Automotive GmbH, 30165 Hannover (DE)
(72) Erfinder: GOTTSWINTER, Wolfgang, 93055 Regensburg (DE)
(86) Internationale Anmeldenummer: PCT/EP2006/061113
(87) Internationale Veröffentlichungsnummer: WO 2006/103243

(56) Entgegenhaltungen:
- DE-A1- 4 428 502
- DE-A1- 10 321 679
- US-A- 5 029 209

## Beschreibung

Die Erfindung betrifft ein Verfahren und Vorrichtungen zum Übertragen von Daten auf einer Datenleitung zwischen einem zentralen Steuergerät und zumindest einem dezentralen Datenverarbeitungsgerät, bei dem in einem Normalbetrieb der Anordnung das zentrale Steuergerät zur Anforderung von Datenpaketen periodisch Synchronisationspulse über die Datenleitung an das zumindest eine Datenverarbeitungsgerät ausgibt und das dezentrale Datenverarbeitungsgerät ihre zur Übertragung anstehenden Daten als Datenpaket nach dem Synchronisationspuls an das zentrale Steuergerät sendet.

Ein solches Verfahren und dazu geeignete Vorrichtungen sind aus der DE 196 09 290 A1 bekannt. In dieser wird ein Sensormodul beschrieben, das über eine Datenleitung mit einem zentralen Steuergerät verbunden ist. Das Sensormodul umfasst einen beschleunigungsempfindlichen Sensor und übermittelt periodisch alle 500 µs ein aus den Sensormesswerten des Sensors aufbereitetes codiertes Datenpaket strommoduliert an das Steuergerät, sobald es einen Synchronisationsspannungspuls auf der Leitung erkannt hat.

An das Steuergerät kann eine Mehrzahl solcher Sensormodule angeschlossen werden, wobei jedes der Sensormodule über eine eigene Zweidrahtleitung mit einer Schnittstelle des Steuergeräts verbunden ist. Die Kommunikation zwischen dem Steuergerät und den Sensormodulen erfolgt bidirektional, wodurch sowohl eine Signalübertragung von einem Sensormodul zu dem Steuergerät wie auch umgekehrt ermöglicht ist. Dies ermöglicht eine Konfiguration jedes Sensormodules bei Fertigstellung des Fahrzeugs, bei deren erster Inbetriebnahme oder auch nach einer unfallbedingten Reparatur durch Ansteuerung des betreffenden Sensormoduls über das Steuergerät.

Für eine Kommunikation zwischen dem Steuergerät und einem Sensormodul wird in einer ersten Variante eine Absenkung eines Spannungswertes auf der Verbindungsleitung zwischen dem Steuergerät und dem Sensormodul von einem zunächst höheren Wert auf einen niedrigeren Wert bewirkt. Die Spannungsabsenkung erfolgt zu einem Zeitpunkt t1 und dauert bis zu einem Zeitpunkt T2 an. Zu diesem Zeitpunkt T2 wird die Spannung von dem abgesenkten Wert wieder auf den ursprünglichen Wert angehoben. Die derartige Spannungssteuerung kann zyklisch wiederholt werden. Die Zeitdauer der Spannungsabsenkung kann durch das Sensormodul detektiert werden, wobei anhand der zeitlichen Differenz zwischen den Zeitpunkten T2 und T1 für das Sensormodul erkennbar ist, ob ein bestimmtes Steuersignal des Steuergerätes vorliegt oder nicht. In einer zweiten Variante wird ein aus mehreren Spannungsschwankungen bestehendes Steuersignal abgesendet, das, in codierter Form, eine Information für das Sensormodul enthält.

Nachdem jedes der Sensormodule über eine eigene Datenleitung mit dem Steuergerät verbunden ist, können die Sensormodule ihre die Sensormesswerte beinhaltenden Daten zu undefinierten Zeitpunkten oder sogar gleichzeitig an das Steuergerät übermitteln, welches die weitere Auswertung dieser Daten vornimmt. Eine Kommunikation von dem Steuergerät mit einem der Sensormodule erfolgt über die diesem Sensormodul zugeordnete Schnittstelle. Eine derartige Anordnung ermöglicht es, baugleiche Sensormodule zu verwenden.

Der Aufbau einer Sensorvorrichtung in der beschriebenen Weise ist aus kommunikationstechnischer Sicht besonders einfach, da keine besonderen Vorkehrungen hinsichtlich der Kommunikation getroffen werden müssen. Andererseits ist von Nachteil, dass für jedes Modul eine separate Datenleitung in einem Fahrzeug verlegt werden muss, was mit erheblichem Aufwand verbunden ist.

Weitere gattungsgemäße Verfahren sind aus der DE 103 21 679 A1, der DE 199 09 535 C1, der US 5 029 209 und der DE 103 21 679 A1 bekannt.

Es ist daher Aufgabe der vorliegenden Erfindung, eine Möglichkeit zum Übertragen von Daten auf einer Datenleitung zwischen einem zentralen Steuergerät und zumindest einem dezentralen Datenverarbeitungsgerät zu schaffen, bei dem identisch aufgebaute Datenverarbeitungsgeräte zum Einsatz kommen können, wobei das Verfahren unter Aufwendung möglichst geringer schaltungstechnischer Ressourcen durchführbar sein soll.

Diese Aufgabe wird durch ein Verfahren mit den Merkmalen gemäß Patentanspruch 1, mit einem dezentralen Datenverarbeitungsgerät mit den Merkmalen des Patentanspruches 16, mit einem zentralen Steuergerät mit den Merkmalen des Patentanspruches 17 sowie mit einer Anordnung mit den Merkmalen des Patentanspruches 18 gelöst. Vorteilhafte Ausgestaltungen ergeben sich aus den abhängigen Patentansprüchen.

Bei dem erfindungsgemäßen Verfahren zur Übertragung von Daten auf einer Datenleitung zwischen einem zentralen Steuergerät und zumindest einem dezentralen Datenverarbeitungsgerät fordert das zentrale Steuergerät von dem zumindest einen dezentralen Datenverarbeitungsgerät Datenpakete durch die periodische Ausgabe von Synchronisationspulsen über die Datenleitung an. Das zumindest eine dezentrale Datenverarbeitungsgerät überträgt die angeforderten Daten über die Datenleitung als ein oder auch mehrere Datenpakete nach dem Synchronisationspuls an das zentrale Steuergerät. Erfindungsgemäß ist die Datenleitung als ein Datenbus ausgebildet, wobei jedes der dezentralen Datenverarbeitungsgeräte vor der erstmaligen Übertragung von Datenpaketen an das zentrale Steuergerät durch das zentrale Steuergerät konfiguriert wird, wobei zur Konfiguration der Anordnung eine bidirektionale Kommunikation zwischen dem zentralen Steuergerät und dem zumindest einen dezentralen Datenverarbeitungsgerät erfolgt. Durch die Konfiguration wird eine geordnete Kommunikation zwischen dem zumindest einen Datenverarbeitungsgerät und dem zentralen Steuergerät eingerichtet.

Das erfindungsgemäße Verfahren ermöglicht den Einsatz von identisch aufgebauten dezentralen Datenverarbeitungsgeräten. Nachdem diese zwecks einfacher Konfiguration der Anordnung an einer als Busleitung ausgebildeten Datenleitung angeschlossen werden sollen, ist es notwendig, diese hinsichtlich einer später einwandfreien Kommunikation zu konfigurieren. Um eine Vorkonfiguration während des Herstellungsprozesses zu vermeiden, ist eine Konfiguration jedes der dezentralen Datenverarbeitungsgeräte vor der erstmaligen Übertragung von Datenpaketen an das zentrale Steuergerät vorgesehen. Die Konfiguration soll dabei durch das zentrale Steuergerät erfolgen. Dazu ist vorgesehen, entsprechende Daten von dem zentralen Steuergerät an das zumindest eine dezentrale Datenverarbeitungsgerät zu senden. Nachdem die Konfiguration vor der erstmaligen Übertragung von Datenpaketen an das zentrale Steuergerät erfolgen soll, erfolgt damit automatisch eine entsprechende Konfiguration, z.B. beim Einschalten der Anordnung. Dieses Vorgehen ermöglicht es beispielsweise, ein defektes dezentrales Datenverarbeitungsgerät einfach auszutauschen und durch ein anderes, baugleiches dezentrales Datenverarbeitungsgerät zu ersetzen. In entsprechender Weise ist es auch möglich, neue dezentrale Datenverarbeitungsgeräte an die Datenleitung anzuschließen, ohne eine vorherige, datenverarbeitungsgerätspezifische Konfiguration vornehmen zu müssen.

Eine bevorzugte Anwendung des erfindungsgemäßen Verfahrens ist dabei der Bereich des Insassenschutzes in Kraftfahrzeugen, wie dies auch in der eingangs erläuterten DE 196 09 290 A1 beschrieben wird. Die Erfindung kann jedoch auch in solchen Bereichen eingesetzt werden, in denen eine sichere Datenübertragung von entscheidender Bedeutung ist. Bei einer Anwendung des erfindungsgemäßen Verfahrens im Bereich des Insassenschutzes in einem Kraftfahrzeug handelt es sich bei dem zentralen Steuergerät vorzugsweise um ein zentral angeordnetes zentrales Steuergerät eines Insassenschutzsystems (eine so genannte Electronic Control Unit, ECU), bei dem dezentralen Datenverarbeitungsgerät vorzugsweise um eine an das zentrale Steuergerät angeschlossene Sensoreinheit, das auch als Satellit bezeichnet wird.

Gemäß einer Weiterbildung des erfindungsgemäßen Verfahrens ist vorgesehen, dass im Rahmen der bidirektionalen Kommunikation von dem zentralen Steuergerät an das zumindest eine dezentrale Datenverarbeitungsgerät zu übertragende Daten als eine Abfolge von Synchronisationspulsen gesendet werden und bei einer Kommunikation von dem zumindest einen dezentralen Datenverarbeitungsgerät an das zentrale Steuergerät zu übertragende Daten als Datenpaket nach dem Synchronisationspuls an das zentrale Steuergerät gesendet werden. Diese vorteilhafte Weiterbildung ermöglicht die Verwendung herkömmlicher zentraler Steuergeräte sowie dezentraler Datenverarbeitungsgeräte, da diese für eine bidirektionale Kommunikation hinsichtlich ihrer Hardware-Realisierung nicht modifiziert werden zu brauchen. Während die Kommunikation von dem dezentralen Datenverarbeitungsgerät zu dem zentralen Steuergerät in herkömmlicher Weise realisiert ist, werden die zur Konfiguration an das zumindest eine dezentrale Datenverarbeitungsgerät zu übertragenden Daten in die von dem zentralen Steuergerät periodisch erzeugten Synchronisationspulse codiert. Die Konfiguration eines dezentralen Datenverarbeitungsgeräts erfolgt somit durch das Auswerten der periodisch erwarteten Synchronisationspulse. Ein vorhandener Synchronisationspuls kann beispielsweise als ein logischer erster Wert und das Nicht-Erzeugen eines Synchronisationspulses als ein logischer zweiter Wert interpretiert werden.

Die Konfiguration des zumindest einen dezentralen Datenverarbeitungsgeräts wird gemäß einer Weiterbildung während einer Initialisierungsphase der Anordnung vorgenommen. Die Initialisierungsphase kann dabei nach jedem Einschalten oder Zurücksetzen der Anordnung ausgeführt werden, so dass eine Konfiguration mit jedem Neustart der Anordnung erfolgt. Hierdurch ist es, wie oben bereits beschrieben, ohne weitere Maßnahmen möglich, einzelne dezentrale Datenverarbeitungsgeräte auszutauschen oder neue Datenverarbeitungsgeräte an die Datenleitung anzufügen.

In einer Weiterbildung umfasst die Konfiguration eines dezentralen Datenverarbeitungsgeräts das Senden einer vorgegebenen Konfigurationssequenz, die von dem dezentralen Datenverarbeitungsgerät auswertbar ist. In der Konfigurationssequenz können in vorgegebener Reihenfolge entsprechende Konfigurationsdaten enthalten sein, die durch das Datenverarbeitungsgerät ausgewertet werden. Eine Konfigurationssequenz enthält vorzugsweise sämtliche für die Konfiguration notwendigen Daten, wodurch die Konfiguration eines einzelnen Datenverarbeitungsgeräts einfach und zügig durchführbar ist.

Eine Weiterbildung sieht vor, dass die Konfiguration eines dezentralen Datenverarbeitungsgeräts zumindest die Zuweisung einer eindeutigen Adresse umfasst, wobei die Adresse für den Normalbetrieb einen für die Anordnung eindeutigen Sendezeitpunkt nach dem Empfang eines Synchronisationspulses festlegt. Die Zuweisung einer Adresse, welche stellvertretend für einen eindeutigen Sendezeitpunkt nach dem Empfang eines Synchronisationspulses ist, ist somit für eine geordnete Kommunikation zwischen dem zentralen Steuergerät und einer Mehrzahl an der Datenleitung angeschlossener Datenverarbeitungsgeräte für eine geordnete Kommunikation vonnöten. Es wird dabei vermieden, dass die an der Datenleitung angeschlossenen dezentralen Datenverarbeitungsgeräte ihre Datenpakete gleichzeitig an die Datenleitung legen. Durch die Festlegung des Sendezeitpunkts durch das Steuergerät über die zugewiesene Adresse wird das zentrale Steuergerät darüber hinaus in die Lage versetzt, zu erkennen, welches Datenpaket welchem der dezentralen Datenverarbeitungsgeräte zuzuordnen ist, um gegebenenfalls ein geeignetes Schutzmittel in diesem Bereich auszulösen.

In einer Weiterbildung ist vorgesehen, dass ein dezentrales Datenverarbeitungsgerät nach erfolgreicher Konfiguration seine Adresse an das zentrale Steuergerät sendet. Anhand dieser Information wird das zentrale Steuergerät in die Lage versetzt, die korrekte Konfiguration des betreffenden Datenverarbeitungsgeräts zu überprüfen.

In einer weiteren Ausgestaltung sendet ein bereits konfiguriertes dezentrales Datenverarbeitungsgerät im Verlauf der Konfiguration eines weiteren dezentralen Datenverarbeitungsgeräts einen Status an das zentrale Steuergerät. Hierdurch kann das zentrale Steuergerät während des gesamten Konfigurationsvorganges über das bestimmungsgemäße Funktionieren eines dezentralen Datenverarbeitungsgeräts in Kenntnis gesetzt werden.

Es ist weiterhin vorteilhaft, wenn ein bereits konfiguriertes dezentrales Datenverarbeitungsgerät eine über die Datenleitung übertragene Konfigurationssequenz ignoriert. Dieses Vorgehen vermeidet das Vorsehen spezifischer Nachrichtenprotokolle. Die Konfigurationssequenz kann damit - unabhängig davon, welches der dezentralen Datenverarbeitungsgeräte gerade konfiguriert werden soll - identisch aufgebaut werden. Eine spezifische Adressierung ist nicht notwendig.

In einer weiteren Ausgestaltung ist vorgesehen, dass nach durchgeführter Konfiguration aller dezentralen Datenverarbeitungsgeräte als Konfigurationssequenz eine Konfigurationsendsequenz übertragen wird, worauf die Anordnung in den Normalbetrieb wechselt. Mit der Konfigurationsendsequenz wird den an der Datenleitung angeschlossenen Datenverarbeitungsgeräten signalisiert, dass die Konfigurationsprozedur zu Ende ist und nun in den regulären Betrieb übergegangen wird, in welchem die Datenverarbeitungsgeräte entsprechend ihres festgelegten Sendezeitpunkts ihre zur Übertragung anstehenden Daten als Datenpaket nach dem Synchronisationspuls an das zentrale Steuergerät senden.

Es ist dabei weiterhin vorgesehen, dass die Konfiguration einer Mehrzahl an mit der Busleitung verbundenen dezentralen Datenverarbeitungsgeräten sequentiell erfolgt. Hierdurch ist es möglich, auf nachrichtenspezifische Protokolle zu verzichten. Die Konfiguration einer Mehrzahl von an der Datenleitung angeschlossenen Datenverarbeitungsgeräten erfolgt dabei dergestalt, dass zunächst das unmittelbar mit dem zentralen Steuergerät verbundene Datenverarbeitungsgerät konfiguriert wird. Im nächsten Schritt wird das dem bereits konfigurierten Datenverarbeitungsgerät benachbarte Datenverarbeitungsgerät konfiguriert, usw.

Es ist weiterhin vorgesehen, dass im Falle einer erfolglosen Konfiguration eines der dezentralen Datenverarbeitungsgeräte ein Abbruch der Konfiguration erfolgt und alle an der Datenleitung angeschlossenen dezentralen Datenverarbeitungsgeräte neu konfiguriert werden. Somit ist sichergestellt, dass die Anordnung lediglich dann in den Normalbetrieb wechselt, wenn sämtliche der an einer Datenleitung angeschlossenen Datenverarbeitungsgeräte bestimmungsgemäß konfiguriert werden konnten.

Um eine Abänderung von Hardware-Komponenten des zentralen Steuergerätes zu vermeiden, ist vorgesehen, dass die Frequenz der periodischen Synchronisationspulse und/oder das Puls-Pausen-Verhältnis während der Konfiguration und dem Normalbetrieb gleich gewählt werden.

In einer weiteren Ausgestaltung ist vorgesehen, dass das dezentrale Datenverarbeitungsgerät eine Sensoreinheit ist und die von diesem an das zentrale Steuergerät übertragenen Datenpakete Sensormesswerte beinhalten.

Vorzugsweise wird der Synchronisationspuls als ein Spannungspuls aufgegeben, während die Datenpakete des dezentralen Datenverarbeitungsgeräts als Strompulse gesendet werden.

Ein erfindungsgemäßes dezentrales Datenverarbeitungsgerät zum Einsatz in einem Verfahren zur Übertragung von Daten gemäß dem beschriebenen Verfahren zeichnet sich dadurch aus, dass es ein durch das dezentrale Datenverarbeitungsgerät ansteuerbares Schaltelement umfasst, das in seiner geöffneten Stellung die Datenleitung auftrennt, so dass ein nachfolgend dezentrales Datenverarbeitungsgerät keinen Datenaustausch mit dem zentralen Steuergerät vornehmen kann.

Ein erfindungsgemäßes zentrales Steuergerät zum Einsatz in einem wie oben beschriebenen Verfahren umfasst einen Synchronisationspulsgenerator zum Erzeugen von periodischen Synchronisationspulsen, die an eine Datenleitung anlegbar sind sowie ein Mittel zum Steuern des Synchronisationspulsgenerators, das die Erzeugung oder Nicht-Erzeugung eines Synchronisationspulses in Abhängigkeit einer zu erzeugenden Konfigurationssequenz veranlasst. Das Mittel zum Steuern des Synchronisationspulsgenerators kann dabei vorteilhaft in Form einer Software realisiert sein, wodurch das Steuergerät keinen Änderungen unterworfen zu werden braucht.

Die erfindungsgemäße Anordnung, die für den Ablauf des beschriebenen Verfahrens einsetzbar ist, weist zumindest ein dezentrales Datenverarbeitungsgerät und ein erfindungsgemäßes zentrales Steuergerät auf.

Nachfolgend wird die Erfindung anhand von Ausführungsbeispielen weiter erläutert. Es zeigen:
- Fig. 1: den Aufbau einer erfindungsgemäßen Anordnung mit einem zentralen Steuergerät und einer Mehrzahl an dezentralen Datenverarbeitungsgeräten, die zum Da- tenaustausch an eine Datenleitung angeschlossen sind,
- Fig. 2: eine Abfolge von Synchronisationspulsen, in welcher Konfigurationsdaten codierbar sind,
- Fig. 3: den schematischen Aufbau einer Konfigurationsse- quenz zum Konfigurieren eines dezentralen Datenver- arbeitungsgeräts,
- Fig. 4: eine Abfolge von Synchronisationspulsen zusammen mit den darin enthaltenen Konfigurationsdaten sowie das zeitliche Antwortverhalten jeweiliger Datenver- arbeitungsgeräte,
- Fig. 5: den schematischen Aufbau einer Konfigurationsendse- quenz, und
- Fig. 6: den Ablauf einer Kommunikation der Datenverarbei- tungsgeräte mit dem zentralen Steuergerät in einem Normalbetrieb.

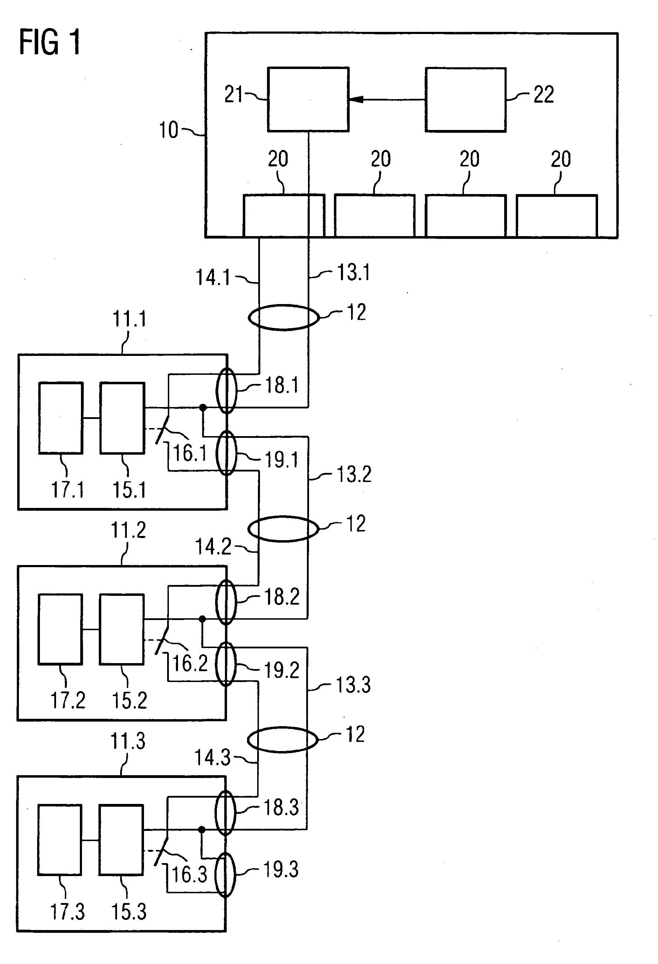

Figur 1 zeigt ein zentrales Steuergerät 10, an das über eine Datenleitung 12 beispielhaft drei identisch ausgebildete dezentrale Datenverarbeitungsgeräte 11.1, 11.2, 11.3 angeschlossen sind. Die Datenverarbeitungsgeräte 11.1, 11.2, 11.3 stellen beispielsweise entfernt von dem zentralen Steuergerät 10 in einem Kraftfahrzeug angeordnete Sensoreinheiten dar. Die an der Datenleitung 12 angeschlossenen Datenverarbeitungsgeräte 11.1, 11.2, 11.3 sind über ein Interface 20 an das Steuergerät 10, das auch als Electronic Control Unit ECU bezeichnet wird, angeschlossen. Das Steuergerät 10 weist ebenfalls beispielhaft drei weitere Interfaces 20 auf, an die wahlweise über eine als Busleitung ausgebildete Datenleitung eine Mehrzahl an Datenverarbeitungsgeräten angeschlossen werden kann, oder an die jeweils ein einzelnes Datenverarbeitungsgerät angeschlossen wird. In einer üblichen Konfiguration eines Schutzsystems in einem Kraftfahrzeug sind die zur Detektion eines seitlichen Aufpralls vorgesehenen Datenverarbeitungsgeräte über eine als Busleitung ausgebildete Datenleitung angeschlossen, während beispielsweise die Detektion eines Front- oder Heck-Aufpralls über einzelne Datenverarbeitungsgeräte, die über eine Zweidrahtleitung an das Interface 20 angeschlossen sind, erfolgt.

Die in Fig. 1 als Busleitung ausgebildete Datenleitung 12 ist als Zweidrahtleitung ausgebildet, welche in der zeichnerischen Darstellung in mehrere Abschnitte unterteilt ist. Die mit dem Bezugszeichen 13.1, 13.2, 13.3 versehenen Abschnitte stellen eine gemeinsame Datenleitung dar, die zum einen dazu dient, periodisch beispielsweise alle 500 µs, Spannungspulse (Sync) an die Datenverarbeitungsgeräte 11.1, 11.2, 11.3 auszugeben, wodurch das zentrale Steuergerät 10 Datenpakete von den Datenverarbeitungsgeräten im Normalbetrieb anfordert. Zum anderen senden die Datenverarbeitungsgeräte 11.1, 11.2, 11.3 auf dieser gemeinsamen Datenleitung 13.1, 13.2, 13.3 Datenpakete in Form von Strompulsen, die z.B. Sensordaten beinhalten. Ebenso dargestellt ist eine gemeinsame Masseleitung 14.1, 14.2, 14.3, die das Massepotential des zentralen Steuergeräts 10 zu den angeschlossenen Datenverarbeitungsgeräten 11.1, 11.2, 11.3 führt. Bevorzugt verfügt jedes der Datenverarbeitungsgeräte 11.1, 11.2, 11.3 über ein Massepotential, an das ein entsprechender Abschnitt der Masseleitung 14.1, 14.2, 14.3 angeschlossen ist.

Jedes der Datenverarbeitungsgeräte 11.1, 11.2, 11.3 verfügt über einen Eingang 18.1, 18.2, 18.3 sowie über einen Ausgang 19.1, 19.2, 19.3, an welche die entsprechenden Abschnitte der Daten- bzw. Masseleitung 13.1, 13.2, 13.3 bzw. 14.1, 14.2, 14.3 angeschlossen sind. Während die Abschnitte der Datenleitungen 13.1, 13.2, 13.3 in einem jeweiligen Datenverarbeitungsgerät 11.1, 11.2, 11.3 elektrisch miteinander verbunden sind, sind die Abschnitte 14.1, 14.2, 14.3 der Masseleitungen über jeweils in den Datenverarbeitungsgeräten 11.1, 11.2, 11.3 vorgesehenen steuerbaren Schaltelemente 16.1, 16.2, 16.3 auftrennbar miteinander verbunden. Die Schaltelemente 16.1, 16.2, 16.3 sind durch eine jeweilige Verarbeitungseinheit 15.1, 15.2, 15.3 des Datenverarbeitungsgeräts 11.1, 11.2, 11.3 steuerbar.

Die Datenverarbeitungsgeräte 11.1, 11.2, 11.3 weisen darüber hinaus Sensorelemente 17.1, 17.2, 17.3 auf, wobei die von diesen ermittelten Daten durch eine jeweilige Verarbeitungseinheit 15.1, 15.2, 15.3 an die Datenleitungen jeweiliger Datenverarbeitungsgeräte gelegt werden können.

Das zentrale Steuergerät 10 umfasst neben weiteren, in der Figur nicht gezeigten Elementen zum Auswerten der von den Datenverarbeitungsgeräten erhaltenen Informationen einen Synchronisationspulsgenerator 21 sowie ein Steuermittel 22, zum Beeinflussen der Abgabe der Synchronisationspulse durch den Synchronisationspulsgenerator 21.

Bevor die Anordnung im Normalbetrieb auf Anforderung des zentralen Steuergeräts 10 zur Übertragung anstehende Daten als Datenpaket nach einem Synchronisationspuls an das zentrale Steuergerät 10 senden kann, ist eine Konfiguration der hinsichtlich ihrer Hard- und Software gleich ausgebildeten Datenverarbeitungsgeräte 11.1, 11.2, 11.3 notwendig. Im Rahmen der Konfiguration wird primär festgelegt, zu welchem Zeitpunkt ein jeweiliges Datenverarbeitungsgerät nach Empfang eines Synchronisationspulses die zur Übertragung stehenden Daten als Datenpaket an das zentrale Steuergerät 10 senden kann.

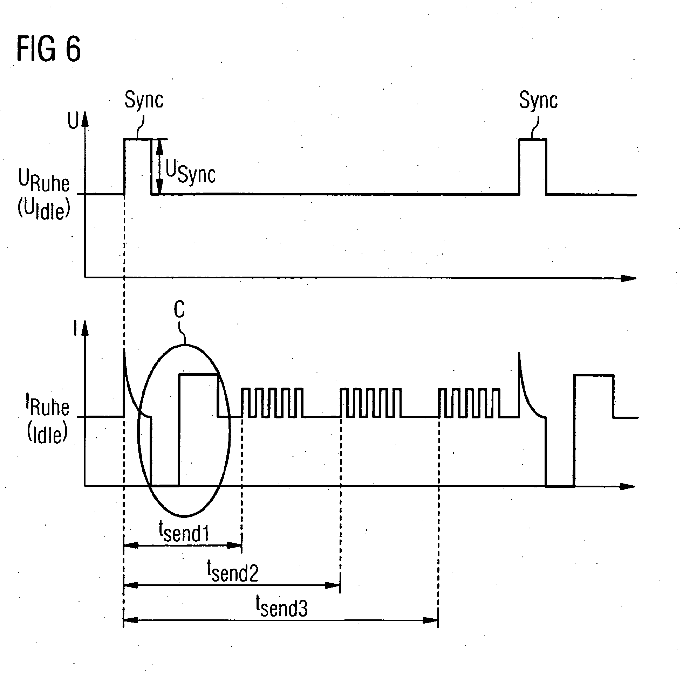

Zum besseren Verständnis der Notwendigkeit und des Zwecks der Konfiguration ist in Fig. 6 eine Kommunikationsabfolge zwischen dem zentralen Steuergerät 10 und den Datenverarbeitungsgeräten 11.1, 11.2, 11.3 im Normalbetrieb dargestellt. Zur Anforderung von Datenpaketen gibt das zentrale Steuergerät periodisch Synchronisationspulse Sync, z.B. im Abstand von 500 µs, über die Datenleitung aus. Nach einem derartigen Synchronisationspuls Sync wird vor der Übertragung eines ersten Datenpakets ein elektrischer Entladungspuls erzeugt (Bezugszeichen C). Die hierzu in einem Datenverarbeitungsgerät notwendigen Vorrichtungen sind in der DE 103 21 678 A1 der Anmelderin beschrieben. Die in Fig. 1 dargestellten Datenverarbeitungsgeräte 11.1, 11.2, 11.3 senden ihre zu übertragenden Daten als Datenpakete zu den Sendezeitpunkten tsend1, tsend2, tsend3. Durch die Konfiguration der Datenverarbeitungsgeräte wird festgelegt, welches Datenverarbeitungsgerät zu welchem Sendzeitpunkt seine Datenpakete über die Datenleitung an das zentrale Steuergerät übertragen kann.

Aufgrund ihrer Baugleichheit können die Datenverarbeitungsgeräte an einer beliebigen Position an die Datenleitung angeschlossen werden. Dies bedeutet, dass der Sendezeitpunkt, welcher einem jeden der Datenverarbeitungsgeräte zugewiesen werden muss, in einer Initialisierungsphase der Anordnung definiert werden muss, noch bevor eine erstmalige Übertragung von Datenpaketen an das zentrale Steuergerät erfolgt. Der Sendezeitpunkt, der die Antwortzeit nach dem Empfang eines Synchronisationspulses darstellt, wird durch die Zuweisung einer Adresse zu einem Datenverarbeitungsgerät realisiert, welcher den exakten Sendzeitpunkt zum Senden des Datenpakets festlegt. Dieses Vorgehen weist den besonderen Vorteil auf, dass eine Konfiguration der Datenverarbeitungsgeräte nicht während ihrer Herstellung durchgeführt zu werden braucht.

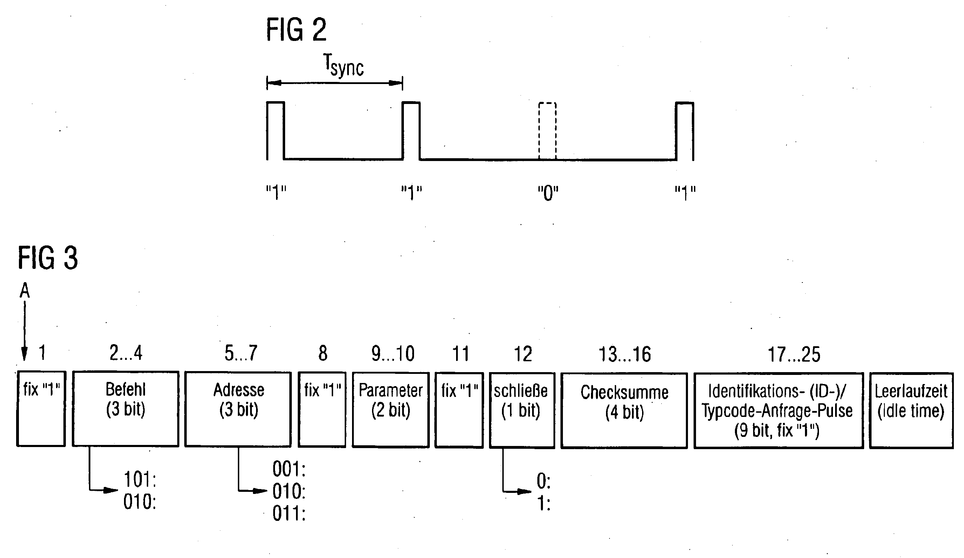

Die Konfiguration erfolgt unter Verwendung von Konfigurationssequenzen, wobei die in einer Konfigurationssequenz enthaltenen Informationen in den Synchronisationspulsen Sync codiert werden. Ein abgesetzter Synchronisationspuls entspricht beispielsweise einer logischen "1", während ein ausgesetzter Synchronisationspuls einer logischen "0" entspricht. Dies ist schematisch in Fig. 2 dargestellt. Die Erzeugung einer Konfigurationssequenz erfolgt somit unter Beeinflussung des Synchronisationspulsgenerators 21 durch das Steuermittel 22 (Fig. 1).

Die Adressierung erfolgt mittels einer Konfigurationssequenz, wie sie in Fig. 3 dargestellt ist. Das zentrale Steuergerät 10 sendet eine Konfigurationssequenz gemäß Fig. 3, in der in den Bits 2 bis 4 codiert ist, dass eine Adressierung erfolgen soll. Die dem Datenverarbeitungsgerät zuzuweisende Adresse ist in den Bits 5 bis 7 enthalten. In den Bits 9 und 10 können weitere Parameter zur Konfiguration des Datenverarbeitungsgeräts, z.B. hinsichtlich einer gewünschten Funktionsweise oder gewünschten Erfassung bzw. Behandlung von Sensormessdaten enthalten sein. Im Bit 12 ist eine Information enthalten, das die Stellung des Schaltelements beeinflusst.

Die Frequenz der periodischen Synchronisationspulse sowie das Puls-Pausen-Verhältnis werden während des Durchlaufens der Konfiguration und dem späteren Normalbetrieb dabei gleich gewählt. Dies ermöglicht einen sicheren Informationsaustausch zwischen dem zentralen Steuergerät und den Datenverarbeitungsgeräten. Wenn aufgrund einer Störung der Datenleitung ein Synchronisationspuls nicht oder falsch durch ein Datenverarbeitungsgerät detektiert wird, so kann dies anhand einer Checksumme festgestellt werden, wodurch die Konfigurationsprozedur abgebrochen und für sämtliche an der Datenleitung angeschlossene Datenverarbeitungsgeräte wiederholt wird.

Nachdem die Kommunikationssequenz, d.h. die Adressierung des ersten Datenverarbeitungsgeräts 11.1 abgeschlossen ist, was das Datenverarbeitungsgerät 11.1 mit dem Senden seiner Adress-ID bestätigt, werden die übrigen Datenverarbeitungsgeräte in der gleichen Weise konfiguriert. Währenddessen antworten bereits initialisierte, d.h. adressierte Datenverarbeitungsgeräte mit einer Statusmeldung, wenn ein Synchronisationspuls von dem zentralen Steuergerät gesendet wird. Die Statusbytes, die von den konfigurierten Datenverarbeitungsgeräten an das zentrale Steuergerät gesendet werden, werden durch dieses nicht ausgewertet. Der Zweck der Statusbytes besteht lediglich darin, zu bestätigen, dass jedes adressierte Datenverarbeitungsgerät während des ihm zugewiesenen Sendezeitpunkts Daten sendet.

Mit dem Beginn der Konfiguration ist zunächst lediglich das Datenverarbeitungsgerät 11.1 mit der Masseleitung 14.1 verbunden, indem dessen Schaltelement 16.1 durch die Verarbeitungseinheit 15.1 geöffnet ist. Nach Beenden der Konfiguration des Datenverarbeitungsgeräts 11.1 schließt dieses sein Schaltelement 16.1, wodurch das Datenverarbeitungsgerät 11.2 an die Datenleitung angeschlossen wird. In entsprechender Weise wird nun dieses Datenverarbeitungsgerät adressiert und erhält dadurch seinen spezifischen Sendezeitpunkt nach dem Erhalt eines Synchronisationspulses für den Normalbetrieb. Auch das zweite Datenverarbeitungsgerät 11.2 schließt nach Auswertung des Bits 12 und dem darin entsprechend gesetzten Bit sein Schaltelement 16.2, so dass dieselbe Sequenz für das nachfolgende Datenverarbeitungsgerät 11.3 durchlaufen wird.

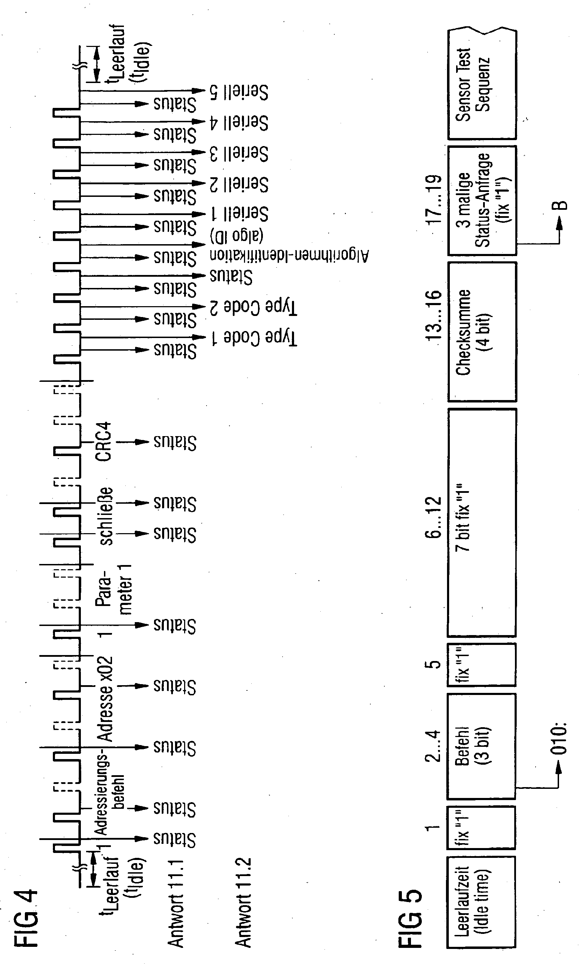

Nach der Adressierung bzw. Konfiguration des letzten Datenverarbeitungsgeräts 11.3 ist in der Konfigurationssequenz im Bit 12 eine Information enthalten, dass dessen Schaltelement 16.3 geöffnet bleiben soll. Anschließend erfolgt das Senden einer Konfigurationsendsequenz, wie sie beispielsweise in Fig. 5 dargestellt ist. In den Bits 2 bis 4 ist hierbei die Information eincodiert, dass es sich um die Konfigurationsendsequenz handelt. Die Bits 6 bis 12 werden standardmäßig mit dem Bit 1 belegt. Die Bits 13 bis 16 enthalten, wie in der Konfigurationssequenz Informationen zur Bildung einer Checksumme. Mit den Bits 17 bis 19 werden die konfigurierten Datenverarbeitungsgeräte 11.1, 11.2, 11.3 aufgefordert, erneut ihren Status zu senden, damit überprüft werden kann, ob die korrekte Checksumme ermittelt wurde.

Figur 4 zeigt den Adressiervorgang des zweiten Datenverarbeitungsgeräts 11.2, wobei das erste Datenverarbeitungsgerät 11.1 bereits adressiert ist. Dabei sind die eine Konfigurationssequenz gemäß Fig. 3 enthaltenen Synchronisationspulse 1 bis 26 dargestellt sowie die entsprechenden Antworten des ersten, konfigurierten Datenverarbeitungsgeräts 11.1 sowie die Antworten des gerade in der Konfiguration befindlichen Datenverarbeitungsgeräts 11.2.

Nach erfolgter Konfiguration sämtlicher Datenverarbeitungsgeräte erfolgt, optional nach Durchlaufen einer Testphase der Anordnung, der Übergang in den Normalbetrieb.

Die beschriebene bidirektionale Kommunikation ist somit lediglich während der Initialisierungsphase der Datenverarbeitungsgeräte notwendig. Mit Hilfe der Synchronisationspulse, wobei ein vorhandener Synchronisationspuls beispielsweise eine logische 1 und ein nicht vorhandener Synchronisationspuls eine logische 0 repräsentiert, wertet ein zu konfigurierendes Datenverarbeitungsgerät die zu einem bestimmten Zeitpunkt erwarteten Informationen aus und setzt dabei eine binäre Information zusammen.

Der Vorteil der Erfindung besteht darin, dass keine zusätzlichen teuren Bauteile, weder in dem zentralen Steuergerät noch in den Datenverarbeitungsgeräten erforderlich sind. Die Anordnung weist ein gutes EMV-Verhalten auf und kann aufgrund der nunmehr notwendigen Konfiguration auch hinsichtlich anderer Parameter angepasst werden. Die Anordnung weist eine hohe Datensicherheit auf, da eine große Puls-Pausen-Zeit implementiert werden kann und die Erkennungsschwelle für einen Synchronisationspuls im Vergleich zu Ruhespannung relativ hoch ist.

## Patentansprüche

1. Verfahren zum Übertragen von Daten auf einer Datenleitung (12) zwischen einem zentralen Steuergerät (10) und zumindest einem dezentralen Datenverarbeitungsgerät (11.1,11.2,11.3), bei dem in einem Normalbetrieb der Anordnung das zentrale Steuergerät (10) zur Anforderung von Datenpaketen periodisch Synchronisationspulse (Sync) über die Datenleitung (12) an das zumindest eine Datenverarbeitungsgerät (11.1,11.2,11.3) ausgibt und das dezentrale Datenverarbeitungsgerät (11.1,111.2,11.3) ihre zur Übertragung anstehenden Daten als Datenpaket nach dem Synchronisationspuls (Sync) an das zentrale Steuergerät (10) sendet, wobei
a) die Datenleitung (12) als Datenbus ausgebildet ist und jedes der dezentralen Datenverarbeitungsgeräte (11.1,11.2,11.3) vor der erstmaligen Übertragung von Datenpaketen an das zentrale Steuergerät (10) durch das zentrale Steuergerät (10) konfiguriert wird, wobei zur Konfiguration der Anordnung eine bidirektionale Kommunikation zwischen dem zentralen Steuergerät (10) und dem zumindest einem dezentralen Datenverarbeitungsgerät (11.1,11.2,11.3) erfolgt,
b) im Rahmen der bidirektionalen Kommunikation
- von dem zentralen Steuergerät (10) an das zumindest eine dezentrale Datenverarbeitungsgerät (11.1,11.2,11.3) zu übertragende Daten als eine Abfolge von Synchronisationspulsen (Sync) gesendet werden, und
- von dem zumindest einem dezentralen Datenverarbeitungsgerät (11.1,11.2,11.3) an das zentrale Steuergerät (10) zu übertragende Daten als Datenpaket nach dem Synchronisationspuls (Sync) an das zentrale Steuergerät (10) gesendet werden,
**dadurch gekennzeichnet, dass**
c) die in einer Konfigurationssequenz enthaltenen Informationen in den Synchronisationspulsen (Sync) codiert werden.

2. Verfahren nach Anspruch 1, **dadurch gekennzeichnet, dass** dabei ein abgesetzter Synchronisationspuls einer logischen "1" entspricht, während ein ausgesetzter Synchronisationspuls einer logischen "0" entspricht und aus der Folge aufeinanderfolgender Synchronisationspulse die in der Konfigurationssequenz enthaltenen Informationen in den Synchronisationspulsen (Sync) codiert werden.

3. Verfahren nach Anspruch 1 oder 2,
**dadurch gekennzeichnet, dass**
die Konfiguration des zumindest einen dezentralen Datenverarbeitungsgeräts während einer Initialisierungsphase der Anordnung vorgenommen wird.

4. Verfahren nach einem der vorherigen Ansprüche,
**dadurch gekennzeichnet, dass**
die Konfiguration eines dezentralen Datenverarbeitungsgeräts (11.1,11.2,11.3) das Senden einer vorgegebenen Konfigurationssequenz umfasst, die von dem dezentralen Datenverarbeitungsgerät (11.1,11.2,11.3) auswertbar ist.

5. Verfahren nach einem der vorherigen Ansprüche,
**dadurch gekennzeichnet, dass**
die Konfiguration eines dezentralen Datenverarbeitungsgeräts (11.1,11.2,11.3) zumindest die Zuweisung einer eindeutigen Adresse umfasst, wobei die Adresse für den Normalbetrieb einen für die Anordnung eindeutigen Sendezeitpunkt nach dem Empfang eines Synchronisationspulses (Sync) festlegt.

6. Verfahren nach Anspruch 5,
**dadurch gekennzeichnet, dass**
ein dezentrales Datenverarbeitungsgerät (11.1,11.2,11.3) nach erfolgreicher Konfiguration seine Adresse an das zentrale Steuergerät (10) sendet.

7. Verfahren nach einem der vorherigen Ansprüche,
**dadurch gekennzeichnet, dass**
ein bereits konfiguriertes dezentrales Datenverarbeitungsgerät (11.1,11.2,11.3) im Verlauf der Konfiguration eines weiteren dezentralen Datenverarbeitungsgeräts (11.1,11.2,11.3) einen Status an das zentrale Steuergerät (10) sendet.

8. Verfahren nach einem der vorherigen Ansprüche,
**dadurch gekennzeichnet, dass**
ein bereits konfiguriertes dezentrales Datenverarbeitungsgerät (11.1,11.2,11.3) eine über die Datenleitung (12) übertragene Konfigurationssequenz ignoriert.

9. Verfahren nach einem der vorherigen Ansprüche,
**dadurch gekennzeichnet, dass**
nach durchgeführter Konfiguration aller dezentralen Datenverarbeitungsgeräte (11.1,11.2,11.3) als Konfigurationssequenz eine Konfigurationsendsequenz übertragen wird, worauf die Anordnung in den Normalbetrieb wechselt.

10. Verfahren nach einem der vorherigen Ansprüche,
**dadurch gekennzeichnet, dass**
die Konfiguration einer Mehrzahl an mit der Busleitung (12,13) verbundenen dezentralen Datenverarbeitungsgeräten (11.1,11.2,11.3) sequentiell erfolgt.

11. Verfahren nach einem der vorherigen Ansprüche,
**dadurch gekennzeichnet, dass**
im Falle einer erfolglosen Konfiguration eines der dezentralen Datenverarbeitungsgeräte (11.1,11.2,11.3) ein Abbruch der Konfiguration erfolgt und alle an der Datenleitung (12) angeschlossenen dezentralen Datenverarbeitungsgeräte neu konfiguriert werden.

12. Verfahren nach einem der vorherigen Ansprüche,
**dadurch gekennzeichnet, dass**
die Frequenz der periodischen Synchronisationspulse und/oder das Puls-Pausenverhältnis während der Konfiguration und dem Normalbetrieb gleich gewählt wird.

13. Verfahren nach einem der vorherigen Ansprüche,
**dadurch gekennzeichnet, dass**
das dezentrale Datenverarbeitungsgerät (11.1,11.2,11.3) eine Sensoreinheit ist und die von diesem an das zentrale Steuergerät (10) übertragenen Datenpakete Sensormesswerte beinhalten.

14. Verfahren nach einem der vorherigen Ansprüche,
**dadurch gekennzeichnet, dass**
der Synchronisationspuls (Sync) als ein Spannungspuls ausgegeben wird.

15. Verfahren nach einem der vorherigen Ansprüche,
**dadurch gekennzeichnet, dass**
die Datenpakete des dezentralen Datenverarbeitungsgeräts (11.1,11.2,11.3) als Strompulse gesendet werden.

16. Zentrales Steuergerät zum Einsatz in einem Verfahren zur Übertragung von Daten gemäß einem der Ansprüche 1 bis 15, mit einem Synchronisationspulsgenerator (21) zum Erzeugen von periodischen Synchronisationspulsen (Sync), die an eine Datenleitung (12) anlegbar sind,
**dadurch gekennzeichnet, dass**
ein Mittel (22) zum Steuern des Synchronisationspulsgenerators (21) vorgesehen ist, das die Erzeugung oder Nicht-Erzeugung eines Synchronisationspulses (Sync) in Abhängigkeit einer zu erzeugenden Konfigurationssequenz veranlasst.

## Claims

1. Method for transmitting data on a data line (12) between a central control device (10) and at least one decentralised data processing device (11.1,11.2,11.3), wherein in a normal operating mode of the arrangement the central control device (10) periodically outputs synchronisation pulses (Sync) via the data line (12) to the at least one data processing device (11.1,11.2,11.3) in order to request data packets, and the decentralised data processing device (11.1,11.2,11.3) sends its data awaiting transmission to the central control device (10) as a data packet following the synchronisation pulse (Sync), wherein
a) the data line (12) is embodied as a data bus and each of the decentralised data processing devices (11.1,11.2,11.3) is configured by the central control device (10) before the first transmission of data packets to the central control device (10), wherein a bidirectional communication between the central control device (10) and the at least one decentralised data processing device (11.1,11.2,11.3) takes place for the purpose of configuring the arrangement,
b) in the course of the bidirectional communication,
- data that is to be transmitted from the central control device (10) to the at least one decentralised data processing device (11.1,11.2,11.3) is sent as a sequence of synchronisation pulses (Sync), and
- following the synchronisation pulse (Sync), data that is to be transmitted from the at least one decentralised data processing device (11.1,11.2,11.3) to the central control device (10) is sent to the central control device (10) as a data packet,
**characterised in that**
c) the information contained in a configuration sequence is encoded in the synchronisation pulses (Sync).

2. Method according to claim 1, **characterised in that** a transmitted synchronisation pulse corresponds in this case to a logical "1", while absence of a synchronisation pulse corresponds to a logical "0" and from the sequence of consecutive synchronisation pulses the information contained in the configuration sequence is encoded in the synchronisation pulses (Sync).

3. Method according to claim 1 or 2,
**characterised in that**
the configuration of the at least one decentralised data processing device is carried out during an initialisation phase of the arrangement.

4. Method according to one of the preceding claims,
**characterised in that**
the configuration of a decentralised data processing device (11.1,11.2,11.3) includes the sending of a predefined configuration sequence which can be analysed by the decentralised data processing device (11.1,11.2,11.3).

5. Method according to one of the preceding claims,
**characterised in that**
the configuration of a decentralised data processing device (11.1,11.2,11.3) includes at least the assignment of a unique address, wherein the address defines a send time following the receipt of a synchronisation pulse (Sync) for the normal operating mode, said send time being unique for the arrangement.

6. Method according to claim 5,
**characterised in that**
following successful configuration a decentralised data processing device (11.1,11.2,11.3) sends its address to the central control device (10).

7. Method according to one of the preceding claims,
**characterised in that**
a decentralised data processing device (11.1,11.2,11.3) which has already been configured sends a status to the central control device (10) in the course of the configuration of a further decentralised data processing device (11.1,11.2,11.3).

8. Method according to one of the preceding claims,
**characterised in that**
a decentralised data processing device (11.1,11.2,11.3) which has already been configured ignores a configuration sequence transmitted over the data line (12).

9. Method according to one of the preceding claims,
**characterised in that**
a configuration end sequence is transmitted as a configuration sequence after configuration of all of the decentralised data processing devices (11.1,11.2,11.3) has been completed, whereupon the arrangement switches into the normal operating mode.

10. Method according to one of the preceding claims,
**characterised in that**
the configuration of a plurality of decentralised data processing devices (11.1,11.2,11.3) which are connected to the bus line (12,13) takes place sequentially.

11. Method according to one of the preceding claims,
**characterised in that**
in the event of an unsuccessful configuration of one of the decentralised data processing devices (11.1,11.2,11.3), the configuration is terminated and all the decentralised data processing devices attached to the data line (12) are reconfigured.

12. Method according to one of the preceding claims,
**characterised in that**
the same frequency of periodic synchronisation pulses is selected and/or the same pulse/pause ratio is selected during the configuration and the normal operating mode.

13. Method according to one of the preceding claims,
**characterised in that**
the decentralised data processing device (11.1,11.2,11.3) is a sensor unit and the data packets transmitted from this sensor unit to the central control device (10) contain sensor measured values.

14. Method according to one of the preceding claims,
**characterised in that**
the synchronisation pulse (Sync) is output as a voltage pulse.

15. Method according to one of the preceding claims,
**characterised in that**
the data packets of the decentralised data processing device (11.1,11.2,11.3) are sent as current pulses.

16. Central control device for use in a method for transmitting data according to one of claims 1 to 15, having a synchronisation pulse generator (21) for generating periodic synchronisation pulses (Sync) that can be applied to a data line (12),
**characterised in that**
a means (22) is provided for controlling the synchronisation pulse generator (21), which means initiates the generation or non-generation of a synchronisation pulse (Sync) as a function of a configuration sequence that is to be generated.

## Revendications

1. Procédé de transmission de données sur une ligne de données (12) entre un appareil central de commande (10) et au moins un appareil décentralisé de traitement de données (11.1, 11.2, 11.3) au cours duquel, pendant un fonctionnement normal, le dispositif de l'appareil central de commande (10) envoie périodiquement, par l'intermédiaire de la ligne de données (12), des impulsions de synchronisation (Sync) audit au moins un appareil de traitement de données (11.1, 11.2, 11.3) afin de requérir des paquets de données, et au cours duquel l'appareil décentralisé de traitement de données (11.1, 11.2, 11.3) émet vers le dispositif central de commande ses données disponibles pour la transmission sous forme de paquet de données et en réponse à l'impulsion de synchronisation (Sync), procédé au cours duquel
a) la ligne de données (12) est réalisée sous la forme d'un bus de données et chacun des appareils décentralisés de traitement de données (11.1, 11.2, 11.3) est configuré par l'appareil central de commande (10) avant la première transmission de paquets de données vers cet appareil central de commande (10), et il se produit, en vu de la configuration du dispositif, une communication bidirectionnelle entre l'appareil central de commande (10) et ledit au moins un appareil décentralisé de traitement de données (11.1, 11.2, 11.3),
b) dans le cadre de la communication bidirectionnelle,
- des données devant être transmises de l'appareil central de commande (10) vers ledit au moins un appareil décentralisé de traitement de données (11.1, 11.2, 11.3) sont émises sous la forme d'une suite d'impulsions de synchronisation, et
- des données devant être transmises dudit au moins un appareil décentralisé de traitement de données (11.1, 11.2, 11.3) vers l'appareil central de commande (10) sont émises après l'impulsion de synchronisation sous la forme d'un paquets de données,
**caractérisé en ce que**
c) les informations contenues dans une séquence de configuration sont codées à l'intérieur des impulsions de synchronisation (Sync).

2. Procédé selon la revendication 1, **caractérisé en ce qu'**une impulsion de synchronisation émise constitue un « 1 » logique, alors qu'une impulsion de synchronisation non émise constitue un « 0 » logique et **en ce qu'**à partir de la suite d'impulsions de synchronisation successives, les informations contenues dans la séquence de configuration sont codées dans les impulsions de synchronisation (Sync).

3. Procédé selon la revendication 1 ou la revendication 2, **caractérisé en ce que** la configuration dudit au moins un appareil décentralisé de traitement de données est réalisée pendant la phase d'initialisation du dispositif.

4. Procédé selon l'une des revendications précédentes, **caractérisé en ce que** la configuration d'un appareil décentralisé de traitement de données (11.1, 11.2, 11.3) comprend l'émission d'une séquence de configuration prédéterminée pouvant être exploitée par l'appareil décentralisé de traitement de données (11.1, 11.2, 11.3).

5. Procédé selon l'une des revendications précédentes, **caractérisé en ce que** la configuration d'un appareil décentralisé de traitement de données (11.1, 11.2, 11.3) comprend au moins l'attribution d'une adresse univoque, cette adresse déterminant pour le fonctionnement normal un instant d'émission univoque pour le dispositif, cet instant se situant après la réception d'une impulsion de synchronisation (Sync).

6. Procédé selon la revendication 5, **caractérisé en ce qu'**un appareil décentralisé de traitement de données (11.1, 11.2, 11.3) envoie son adresse à l'appareil central de commande (10) après une configuration réussie.

7. Procédé selon l'une des revendications précédentes, **caractérisé en ce qu'**un appareil décentralisé de traitement de données (11.1, 11.2, 11.3) déjà configuré envoie à l'appareil central de commande (10) un signal d'état pendant la configuration d'un autre appareil décentralisé de traitement de données (11.1, 11.2, 11.3).

8. Procédé selon l'une des revendications précédentes, **caractérisé en ce qu'**un appareil décentralisé de traitement de données (11.1, 11.2, 11.3) déjà configuré ignore une séquence de configuration transmise par l'intermédiaire de la ligne de données (12).

9. Procédé selon l'une des revendication précédentes, **caractérisé en ce qu'**après achèvement de la configuration, il est envoyé à tous les appareils décentralisés de traitement de données (11.1, 11.2, 11.3) une séquence d'émission de configuration en tant que séquence de configuration, après quoi le dispositif commute sur le fonctionnement normal.

10. Procédé selon l'une des revendications précédentes, **caractérisé en ce que** la configuration d'une pluralité d'appareils décentralisés de traitement de données (11.1, 11.2, 11.3) raccordés à la ligne de bus (12, 13) est réalisée séquentiellement.

11. Procédé selon l'une des revendications précédentes, **caractérisé en ce qu'**au cas où la configuration de l'un des appareils décentralisés de traitement de données (11.1, 11.2, 11.3) échoue, il se produit une interruption de la configuration et il est effectué une nouvelle configuration de tous les d'appareils décentralisés de traitement de données raccordés à la ligne de données (12).

12. Procédé selon l'une des revendications précédentes, **caractérisé en ce qu'**il consiste à choisir la même fréquence pour les impulsions de synchronisation périodiques et/ou le même rapport de tout ou rien pendant la configuration et pendant le fonctionnement normal.

13. Procédé selon l'une des revendications précédentes, **caractérisé en ce que** l'appareil décentralisé de traitement de données (11.1, 11.2, 11.3) est une unité de capteur, et **en ce que** les paquets de données transmis par cet appareil à l'appareil central de commande (10) contiennent des valeurs de mesure de capteur.

14. Procédé selon l'une des revendications précédentes, **caractérisé en ce que** l'impulsion de synchronisation (Sync) est émise sous la forme d'une impulsion de tension.

15. Procédé selon l'une des revendications précédentes, **caractérisé en ce que** les paquets de données de l'appareil décentralisé de traitement de données (11.1, 11.2, 11.3) sont émis sous la forme d'impulsions de courant.

16. Appareil de commande central destiné à être mis en oeuvre au cours d'un procédé de transmission de données selon l'une des revendications 1 à 15, comportant un générateur (21) d'impulsions de synchronisation destiné à engendrer des impulsions périodiques de synchronisation (Sync) pouvant être appliquées à une ligne de données (12), **caractérisé en ce qu'**il est prévu un moyen (22) pour commander le générateur (21) d'impulsions de synchronisation, ce moyen provoquant la production ou la non production d'une impulsion de synchronisation (Sync) en fonction d'une séquence de configuration à engendrer.
